# EUROPÄISCHE PATENTSCHRIFT

(11) **EP 0 761 083 B1**
(45) Veröffentlichungstag und Bekanntmachung des Hinweises auf die Patenterteilung: **09.05.2001**
(21) Anmeldenummer: 96111480.8
(22) Anmeldetag: 17.07.1996
(51) Int. Cl.: A01B 73/04

(54) **Bodenbearbeitungsgerät**
Soil working apparatus
Outil de travail du sol

(30) Priorität: 18.08.1995 DE 29513290 U; 12.10.1995 DE 29516162 U
(43) Veröffentlichungstag der Anmeldung: 12.03.1997
(73) Patentinhaber: Lemken GmbH & Co. KG, 46519 Alpen (DE)
(72) Erfinder: Gebbeken, Martin, 46519 Alpen (DE)
(74) Vertreter: Schulte, Jörg, Dipl.-Ing.

(56) Entgegenhaltungen:
- EP-A- 0 022 283
- EP-A- 0 422 721
- DE-A- 2 220 162
- DE-A- 3 610 865
- FR-A- 1 176 046

## Beschreibung

Die Erfindung betrifft ein breitarbeitendes Bodenbearbeitungsgerät, insbesondere eine Kreiselegge, mit mindestens zwei Geräteteilgruppen mit angetriebenen Arbeitswerkzeugen mit zugehörigen Nachlaufwalzen, die in Arbeitsstellung quer zur Arbeitsrichtung des ziehenden Traktors angeordnet sind und mit einem Tragrahmen, an dem die Geräteteilgruppen mit Nachlaufwalzen befestigt sind, höhenbeweglich verbunden sind, wobei der Tragrahmen seinerseits über eine Verbindungseinrichtung an den ziehenden Traktor ankoppelbar ist.

Derartige Kreiseleggen werden dort eingesezt, wo eine große Flächenleistung bzw. Schlagkraft erforderlich ist.

Aus der DE GM 94 05 585 ist eine Kreiselegge bekannt, die aus zwei Geräteteilgruppen besteht, die über ein in Fahrtrichtung liegendes Gelenk miteinander verbunden sind. Für den Transport ist dieses Gerät mit einer sogenannten Langfahreinrichtung ausgerüstet. Der Nachteil dieser bekannten Ausführung ist der, daß die Tiefenführung einer Geräteteilgruppe von der anderen Geräteteilgruppe stark beeinflußt wird, also nicht unabhängig voneinander ist und daß die Umstellung von der Arbeitsstellung in die Transportstellung sehr aufwendig ist. Der Fahrer muß den Traktor verlassen, das Gerät abkuppeln und nach dem Verschwenken der Deichsel wieder ankuppeln. Außerdem ist es nachteilig, daß während der Arbeit das zusätzliche Gewicht der Deichsel und der Transportkarre mitgeführt werden muß.

Die DE PS 31 07 696 zeigt eine Kreiselegge, deren Seitenrahmen mit den Geräteteilgruppen einschwenkbar sind und bei der die Geräteteilgruppen über Parallellenker geführt werden. Diese Führung der Gerätefelder erfordert einen Tragrahmen mit Stützrädern, was den Nachteil mit sich bringt, daß das Gerät insgesamt sehr aufwendig wird. Auch der Abstand zwischen Traktor und Gerät muß größer als üblich sein, damit die Räder in eingeklappter Stellung nicht gegen die Traktorkabine stoßen. Dies führt zu einer zu großen Vorderachsenentlastung und verschlechtert dadurch die Manövrierbarkeit des Traktors. Die Kreiselegge gemäß DE PS 23 02 828 ist ebenfalls einklappbar, sie läßt eine unabhängige Bodenanpassung der einzelnen Geräteteilgruppen jedoch nicht zu. Ein ungleichmäßig bearbeitetes Saatbett ist das Ergebnis.

Die französische Patentanmeldung FR 27 02 628 zeigt eine breitarbeitende Kreiselegge mit mittigen Schwenkachsen, die zwar eine unabhängige Bodenanpassung der einzelnen Geräteteilgruppen zuläßt, aber auch hier muß für den Transport das Gerät aufwendig umgebaut werden. Eine dem Gerät verbleibende Längsfahr- bzw. Aufsatteleinrichtung macht das Gerät unnötig schwer, aufwendig und teuer.

Nach der EP-A-0 422 721 ist ein Gerät bekannt, bei dem bug- und heckseitig Geräteteilgruppen vorgesehen sind. Die bugseitige Geräteteilgruppe behindert die Sicht für den Traktorfahrer, erfordert mindestens drei Teilgruppen und blockiert die Bugseite des Traktors, so dass hier andere Bodenbearbeitungsgeräte nicht angeordnet werden können.

Aus der DE-A1-2 220 162 ist ein Bodenbearbeitungsgerät mit einklappbaren Eggen bekannt. Die Eggen sind durch entsprechende Lagerungen schwenkbar, allerdings ohne Hinweis wie solche schwenkbaren Lagerungen bei schweren Kreiseleggen mit Nachläufen aussehen müssen.

Der Erfindung liegt die Aufgabe zugrunde, eine breitarbeitende Kreiselegge zu schaffen, die einfach von der Arbeitsstellung in die Transportstellung und umgekehrt bringbar ist, die ein- und ausschwenkbar ist, die eine sehr gute Bodenanpassung der Geräteteilgruppen bei günstiger Schwerpunktlage sicherstellt.

Die Aufgabe wird gemäß der Erfindung durch die Merkmale des Anspruchs 1 gelöst.

Eine derartig ausgebildete Kreiselegge kann einfach eingeklappt werden, baut kurz und verfügt über eine ausgezeichnete Bodenanpassung, d. h. daß jede der beiden Geräteteilgruppen sich um die jeweilige zugeordnete Schwenklagerung über die Anschläge begrenzt frei bewegen kann und daß eine angemessene schmale Transportbreite erreichbar ist. Die Anschläge werden im Abstand zu den Schwenklagerungen so angeordnet, daß darüber die Geräteteilgruppen mit den Seitenrahmen quasi den Bewegungsbereich beschränkend verbunden sind. Die Begrenzungen werden dabei an den Geräteteilgruppen angeordnet und stützen sich an den Seitenrahmen ab.

Die Ausbildung ermöglicht ein einfaches Verschwenken der einzelnen Geräteteilgruppen von der Arbeitsstellung in die Transportstellung und umgekehrt.

Eine Tiefeneinstellung bzw. Anpassung an unterschiedliche Gegebenheiten bzw. unterschiedliche Ausrüstungen ist problemlos möglich, indem die Nachlaufwalzen über ihre Träger höhenveränderlich über eine Einrichtung mit den Geräteteilgruppen verbunden sind.

Um den Bewegungsablauf beim Verschwenken der Geräteteilgruppen in die Arbeitsstellung oder aus der Arbeitsstellung in die Transportstellung möglichst einfach zu gestalten, sieht die Erfindung vor, daß die Seitenrahmen mit in Schwenkrichtung vorstehenden Hebeln und der Zentralrahmen mit Anlenkpunkten ausgerüstet sind, an die Hydraulikzylinder die Seitenrahmen entsprechend einschwenkend angeschlossen sind. Mit Hilfe der so angeordneten Hydraulikzylinder läßt sich die jeweilige Geräteteilgruppe sicher in die jeweilige Stellung verschwenken. Dabei sichert eine Begrenzung die Schwenkbarkeit, so daß die Geräteteilgruppen sich zwar dem Boden anpassen können, daß aber eine Einschwenkbarkeit für den Transport sichergestellt ist.

Diese beschränkte Schwenkbarkeit wird vorteilhaft durch eine Ausbildung erreicht, nach der die Anschläge elastisch ausgebildet sind. Dies kann z. B. durch gummielastische Anschläge zwischen den Geräteteilgruppen und den Seitenrahmen oder auch durch Federn geschehen. Dabei ist es zweckmäßig, wenn die Anschläge einstellbar, vorzugsweise von 0° - 10° einstellbar ausgebildet sind. Durch diese Anschläge wird eine gute Bodenanpassung und auch eine Schwenkbarkeit in die Transportstellung gewährleistet, ohne daß der Traktorfahrer irgendwelche Einstellungen an der Gerätekombination vornehmen muß.

Die Erfindung zeichnet sich insbesondere dadurch aus, daß ein Bodenbearbeitungsgerät geschaffen ist, daß breit arbeitend ausgebildet ist, daß leicht und schnell einschwenkbar bzw. in die Arbeitsstellung ausschwenkbar ist, wobei der Fahrer seinen Traktor nicht verlassen muß. In der Transportstellung ist dafür Sorge getragen, daß die zusammengeklappten Geräteteilgruppen die zulässige Transportbreite nicht überschreiten. Insbesondere ist bei der Arbeit eine ausgezeichnete Bodenanpassung der einzelnen Geräteteilgruppen sichergestellt bzw. gewährleistet.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Vorkopfansicht einer Kreiselegge mit zwei Geräteteilgruppen, wobei eine der Geräteteilgruppen sich in der Arbeitsstellung und die andere sich in der Transportstellung befindet,
- Fig. 2: eine Seitenansicht einer derartigen Kreiselegge mit Geräteteilgruppen und Nachlaufwalzen ohne Tragrahmen und
- Fig. 3: eine Draufsicht einer Geräteteilgruppe gemäß Fig. 2.

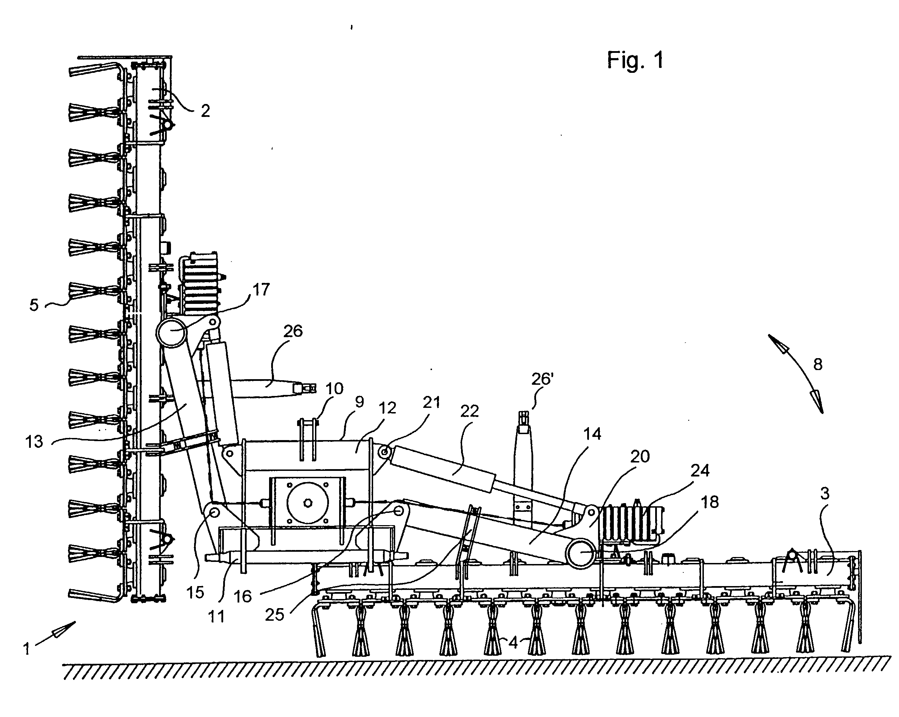

Fig. 1 zeigt eine Vorkopfansicht bzw. Frontansicht der Kreiselegge 1, wobei diese über nicht dargestellte Nachlaufwalzen in der Tiefe geführt wird. Die Kreiselegge 1 besteht aus zwei Geräteteilgruppen 2, 3, die in Schwenkrichtung 8 um den Tragrahmen 9 schwenkbar sind.

Die einzelnen Geräteteilgruppen 2, 3 sind mit einer Vielzahl von Arbeitswerkzeugen 4, 5 bestückt. Diese Arbeitswerkzeuge 4, 5 drehen sich um die hier nicht bezeichnete Achsen, wobei der Antrieb über das Getriebe 24 erfolgt.

Die Kreiselegge 1 wird in Arbeitsrichtung 7 bewegt, die nach Fig. 1 in die Bildebene hineinweist, während die Geräteteilgruppen 2, 3 in Schwenkrichtung 8, also rechtwinklig zur Arbeitsrichtung 7 verschwenkbar sind. Der Tragrahmen 9 ist über Verbindungseinrichtungen 10, 11, d. h. über Ober- und Unterlenker mit dem hier nicht dargestellten Traktor zu verbinden.

Der Tragrahmen 9 besteht aus dem Zentralrahmen 12 und den Seitenrahmen 13, 14, die um Achsen 15, 16 verschwenkbar mit dem Zentralrahmen 12 verbunden sind und endseitig die Schwenklagerung 17, 18 tragen.

Der Zentralrahmen 12 weist nicht nur die Achsen 15, 16 zum Anlenken der Seitenrahmen 13, 14 auf, sondern auch Anlenkpunkte 21, wobei diese dazu dienen, jeweils einen Hydraulikzylinder 22 anzuschließen, der am gegenüberliegenden Ende an dem Seitenrahmen 13, 14 bzw. den Geräteteilgruppen 2, 3 zugeordneten Hebeln 20 angreifen.

Die Schwenkbarkeit der Geräteteilgruppen 2, 3 um Schwenklagerungen 17, 18 wird über Anschläge 25 begrenzt. Diese Anschläge 25 sind mit der Geräteteilgruppe 2, 3 verbunden und stützen sich beidseitig am jeweiligen Seitenrahmen 13, 14 ab. Die Anschläge 25 sind einstellbar. Sie können falls erforderlich auch gesperrt werden. Für die Transportfahrt ist außerdem eine Ausschwenksicherung 26, 26' vorgesehen, über die die beiden Geräteteilgruppen 2, 3 formschlüssig miteinander verbunden sind, wenn sich beide in Transportstellung befinden, also hochgeschwenkt sind.

Die Gelenkwelle ist strichpunktiert lediglich angedeutet. Auf eine detailgenaue Darstellung kann verzichtet werden.

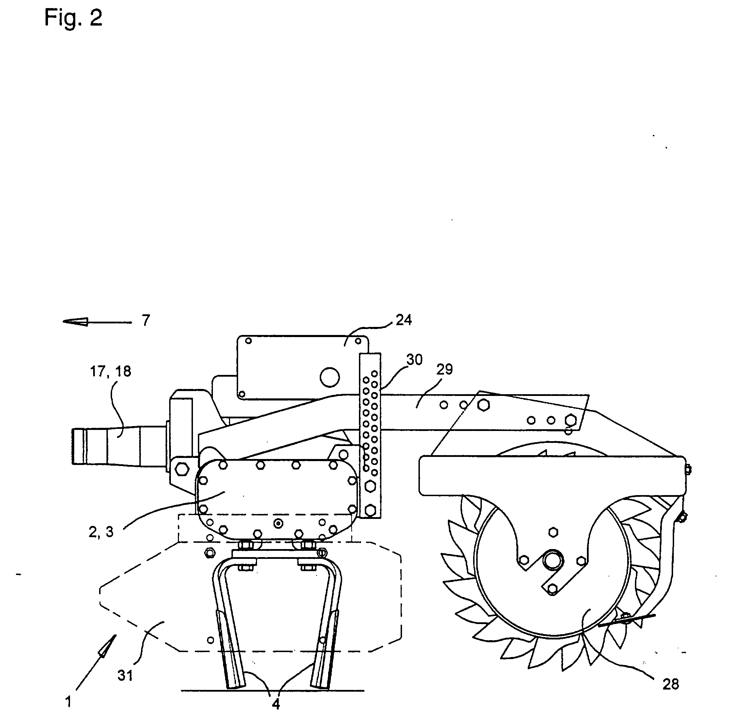

Fig. 2 verdeutlicht die Arbeitsrichtung der gesamten Kreiselegee 1. Mit 17, 18 sind die Schwenklagerungen bezeichnet. Fig. 2 verdeutlicht auch, daß an die Geräteteilgruppe 2 bzw. 3 eine Nachlaufwalze 28 über den Träger 29 angeschlossen ist. Dabei ist die Nachlaufwalze 28 über die Träger 29 schwenkbar an die jeweilige Geräteteilgruppe 2, 3 angelenkt, wobei über die Einrichtung 30 eine beliebige Höhenverstellung erreichbar ist.

Auf die Darstellung des Tragrahmens 9 ist hier verzichtet. Angedeutet sind die üblichen Seitenschilde 31 der Kreiselegge 1.

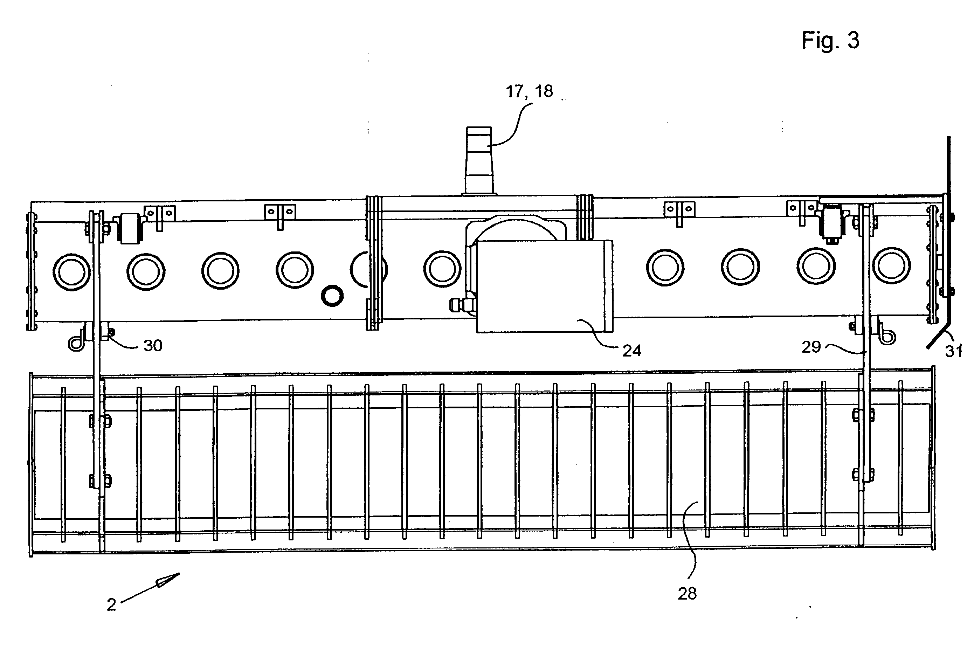

Fig. 3 zeigt eine Draufsicht einer Geräteteilgruppe 2, die an den unter Fig. 1 dargestellten Tragrahmen 9 anbaubar ist. Die Nachlaufwalze 28 folgt dieser Geräteteilgruppe 2. Die Einrichtung 30 dient zur Höhenverstellung.

## Patentansprüche

1. Breitarbeitendes Bodenbearbeitungsgerät, insbesondere Kreiselegge (1), mit mindestens zwei Geräteteilgruppen (2, 3) von angetriebenen Arbeitswerkzeugen (4, 5) mit zugehörigen Nachlaufwalzen (28), die in Arbeitsstellung quer zur Arbeitsrichtung (7) des ziehenden Traktors angeordnet sind und mit einem Tragrahmen (9), an dem die Geräteteilgruppen (2, 3) mit Nachlaufwalzen (28) befestigt sind, höhenbeweglich verbunden sind, wobei der Tragrahmen (9) seinerseits über eine Verbindungseinrichtung (10, 11) an den ziehenden Traktor ankoppelbar ist,
**dadurch gekennzeichnet,**
daß die Geräteteilgruppen (2, 3) mit den Nachlaufwalzen (28) jeweils über in Arbeitsrichtung (7) und horizontal angeordnete Schwenklagerungen (17, 18) schwenkbar gelagert sind und daß die Schwenklagerungen (17, 18) mittig zu der jeweiligen Geräteteilgruppe (2, 3) angeordnet sind und daß die Geräteteilgruppen (2, 3) mit Nachlaufwalzen (28) über den Tragrahmen (9) in eine ca. 90° zur Arbeitsstellung befindlichen Transportstellung schwenkbar sind,
daß der Tragrahmen (9) aus einem Zentralrahmen (12) und Seitenrahmen (13, 14), die einschwenkbar über Achsen (15, 16) mit dem Zentralrahmen (12) verbunden sind, besteht und daß die Seitenrahmen (13, 14) die Schwenklagerungen (17, 18) aufweisen, bzw. darüber mit den Geräteteilgruppen (2, 3) verbunden sind,
daß die Schwenkbarkeit der Geräteteilgruppen (2, 3) um die Schwenklagerungen (17, 18) über Anschläge (25) begrenzt ist, die im Abstand zu den Schwenklagerungen (17, 18) mit den Geräteteilgruppen (2, 3) verbunden und sich an den Seitenrahmen (13, 14) abstützend ausgebildet sind.

2. Bodenbearbeitungsgerät nach Anspruch 1,
**dadurch gekennzeichnet,**
daß die Nachlaufwalzen (28) über Träger (29) und Einrichtungen (30) höhenveränderlich mit den Geräteteilgruppen (2, 3) verbunden sind.

3. Bodenbearbeitungsgerät nach Anspruch 2,
**dadurch gekennzeichnet**,
daß die Seitenrahmen (13, 14) endseitig die Schwenklagerungen (17, 18) aufweisen.

4. Bodenbearbeitungsgerät nach Anspruch 1 bis Anspruch 3,
**dadurch gekennzeichnet,**
daß die Seitenrahmen (13, 14) mit in Einschwenkrichtung (8) vorstehenden Hebeln (20) und der Zentralrahmen (12) mit Anlenkpunkten (21) ausgerüstet sind, an die Hydraulikzylinder (22) die Seitenrahmen (13, 14) entsprechend einschwenkend angeschlossen sind.

5. Bodenbearbeitungsgerät nach Anspruch 1,
**dadurch gekennzeichnet,**
daß die Anschläge (25) elastisch ausgebildet sind.

6. Bodenbearbeitungsgerät nach Anspruch 1,
**dadurch gekennzeichnet,**
daß die Anschläge (25) einstellbar, vorzugsweise eine Schwenkbarkeit der Geräteteilgruppen (2, 3) um die Schwenklagerungen (17, 18) von 0° - 10° zulassend ausgebildet sind.

## Claims

1. Cultivating equipment operating over a broad area, in particular a circular spike harrow (1), with at least two groups of implements (2, 3) consisting of driven work tools (4, 5) with associated tracking rollers (28) which in the operating position are arranged transversely to the direction of operation (7) of the pulling tractor and are connected adjustably in height to a supporting frame (9) on which the groups of implements (2, 3) with tracking rollers (28) are secured, wherein the supporting frame (9) can in turn be coupled to the pulling tractor by a connecting device (10, 11), characterised in that the groups of implements (2, 3) with the tracking rollers (28) are pivotally mounted via pivot bearings (17, 18) arranged horizontally and in the direction of operation (7), and in that the pivot bearings (17, 18) are arranged centrally with respect to the respective group of implements (2, 3), and in that the group of implements (2, 3) with tracking rollers (28) can be pivoted via the supporting frame (9) into a transport position located at approximately 90° to the operating position, in that the supporting frame (9) consists of a central frame (12) and lateral frames (13, 14) which are pivotally connected by axes (15, 16) to the central frame (12), and in that the lateral frames (13, 14) have pivot bearings (17, 18) or are connected thereby to the groups of implements (2, 3), in that the pivotability of the groups of implements (2, 3) about the pivot bearings (17, 18) is limited by stops (25) which are connected to the groups of implements (2, 3) at a distance from the pivot bearings (17, 18) and are designed so as to rest on the lateral frames (13, 14).

2. Cultivating equipment according to claim 1, characterised in that the tracking rollers (28) are connected adjustably in height to the groups of implements (2, 3) by means of carriers (29) and devices (30).

3. Cultivating equipment according to claim 2, characterised in that the lateral frames (13, 14) have pivot bearings (17, 18) at their ends.

4. Cultivating equipment according to claim 1 to claim 3, characterised in that the lateral frames (13, 14) are equipped with levers (20) projecting in the direction of pivoting (8) and the central frame (12) is equipped with articulating points (21) to which the hydraulic cylinders (22) of the lateral frames (13, 14) are accordingly pivotally connected.

5. Cultivating equipment according to claim 1, characterised in that the stops (25) are resilient in design.

6. Cultivating equipment according to claim 1, characterised in that the stops (25) are adjustable in design, preferably so as to permit the groups of implements (2, 3) to pivot through 0° to 10° about the pivot bearings (17, 18).

## Revendications

1. Appareil de travail du sol travaillant en largeur, notamment herse rotative (1), comportant au moins deux groupes partiels (2, 3) d'outils de travail entraînés (4, 5) auxquels sont associés des cylindres suiveurs (28), qui sont disposés dans la position de travail transversalement par rapport à la direction de travail (7) du tracteur qui tire l'appareil et sont reliés de manière à être déplaçables en hauteur à un cadre de support (9), auquel sont fixés les groupes partiels (2, 3) d'outils équipés de cylindres suiveurs (28), le cadre de support (9) pouvant être couplé pour sa part au tracteur qui tire l'appareil, par l'intermédiaire d'un dispositif de liaison (10, 11),
caractérisé en ce
que les groupes partiels (2, 3) d'outils équipés des cylindres suiveurs (28) sont montés de manière à pouvoir pivoter respectivement au moyen de supports pivotants (17, 18) disposés horizontalement et dans la direction de travail (7) et que les supports pivotants (17, 18) sont disposés en position centrée par rapport aux groupes partiels respectifs (2, 3) d'outils et que les groupes partiels (2, 3) d'outils équipés de cylindres suiveurs (28) peuvent pivoter au-dessus du cadre de support (9) pour venir dans une position de transport située à environ 90 degrés de la position de travail,
que le cadre de support (9) est constitué par un cadre central (12) et des cadres latéraux (13, 14), qui sont reliés au cadre central (12) de manière à pouvoir pivoter au moyen d'axes (15, 16), et que les cadres latéraux (13, 14) possèdent des supports pivotants (17, 18) ou sont reliés aux groupes partiels (2, 3) d'outils par l'intermédiaire de ces supports pivotants,
que la possibilité de pivotement des groupes partiels (2, 3) d'outils autour des supports pivotants (17, 18) est limitée par l'intermédiaire de butées (25), qui sont reliées aux groupes partiels (2, 3) d'outils à distance des supports pivotants (17, 18) et sont agencées de manière à prendre appui sur les cadres latéraux (13, 14).

2. Appareil de travail du sol selon la revendication 1, caractérisé en ce
que les cylindres suiveurs (28) sont reliés aux groupes partiels (2, 3) d'outils en étant réglables en hauteur au moyen de supports (29) et de dispositifs (30).

3. Appareil de travail du sol selon la revendication 2, caractérisé en ce
que les cadres latéraux (13, 14) possèdent des supports pivotants (17, 18) au niveau de leur extrémité.

4. Appareil de travail du sol selon la revendication 1 à la revendication 3, caractérisé en ce
que les cadres latéraux (13, 14) sont équipés de leviers (20) qui font saillie dans la direction de pivotement (8), et que le cadre central (12) est équipé de points d'articulation (21), au niveau desquels sont raccordés des vérins hydrauliques (22) qui font pivoter de façon correspondante les cadres latéraux (13, 14).

5. Appareil de travail du sol selon la revendication 1, caractérisé en ce
que les butées (25) sont agencées de manière à être élastiques.

6. Appareil de travail du sol selon la revendication 1, caractérisé en ce
que les butées (25) sont agencées de manière à être réglables, c'est-à-dire de manière à permettre une possibilité de pivotement des groupes partiels (2, 3) d'outils de 0°-10° autour des supports pivotants (17, 18).
